# FASCICULE DE BREVET EUROPEEN

(11) **EP 0 538 154 B1**
(45) Date de publication et mention de la délivrance du brevet: **06.12.1995**
(21) Numéro de dépôt: 92420352.4
(22) Date de dépôt: 07.10.1992
(51) Int. Cl.: H01M 4/68, H01M 10/18

(54) **Electrodes bipolaires pour accumulateur au plomb**
Bipolare Elektroden für Bleiakkumulator
Bipolar electroder for head accumulator

(30) Priorité: 14.10.1991 FR 9112853
(43) Date de publication de la demande: 21.04.1993
(73) Titulaire: LABORATOIRES SORAPEC, 94120 Fontenay-sous-Bois (FR)
(72) Inventeur: Bronoel, Guy, F-78000 Versailles (FR); Besse, Serge, F-94200 Ivry-Sur-Seine (FR); Tassin, Noelle, F-94120 Fontenay-Sous-Bois (FR)
(74) Mandataire: Leszczynski, André

(56) Documents cités:
- EP-A- 0 402 265
- WO-A-89/12329
- FR-A- 1 260 857
- PATENT ABSTRACTS OF JAPAN, vol. 6, no. 147 (E-123), 06 août 1982

## Description

La présente invention se rapporte à des électrodes bipolaires pour accumulateurs Pb-PbO₂, plus communément appelés accumulateurs au plomb.

Il a été effectué de nombreuses études en vue de réaliser des accumulateurs Pb-PbO₂ à collecte frontale, donc utilisant des électrodes bipolaires. Ce mode de collecte des charges est particulièrement avantageux lorsque la batterie est soumise à de forts régimes de décharge. On peut montrer, d'une façon plus générale que l'emploi d'électrodes bipolaires confère les avantages suivants :
- champ électrique uniforme, donc réduction des risques inhérents à un fonctionnement à une densité de courant trop élevée des parties hautes des plaques. Il en résulte une augmentation de la longévité de la batterie ;
- allégement des collecteurs puisque le parcours des charges électroniques est de l'ordre de 2 millimètres contre plusieurs dizaines de centimètres dans le cas d'une collecte traditionnelle. Il en résulte notamment que la masse du plomb assurant la conduction dans ou sur le maillage de rétention des matières actives pourra être très faible. Alors la masse de l'électrode bipolaire sera pour l'essentiel constituée de la masse des matières actives et de celle du collecteur bipolaire, lequel du point de vue conduction électronique a intérêt à être le plus mince possible.

Malheureusement, la réalisation de telles électrodes bipolaires se heurte à deux difficultés majeures.

L'une tenant à la réalisation d'une bonne liaison électrique entre les structures de rétention des matières actives (maillage ou mousses) et le collecteur bipolaire.

L'autre au fait que la paroi du collecteur bipolaire en contact avec l'électrode positive est soumise à une oxydation sévère et qu'il convient donc de trouver des matériaux résistant à cette oxydation qui, sans cela, pourrait conduire à une perforation du collecteur. On conçoit par ailleurs que la solution consistant, pour résoudre ce problème, à augmenter fortement l'épaisseur de la paroi, est sans intérêt puisque ne pouvant conduire à un allégement du système.

L'objet de la présente invention est une électrode bipolaire et des procédés de réalisation de telles électrodes bipolaires, ne présentant pas les inconvénients précités.

L'électrode bipolaire selon l'invention, destinée aux accumulateurs Pb-PbO₂, est constituée essentiellement d'une membrane conductrice électroniquement et de matières actives retenues sur la membrane. La membrane consiste en un feuillard d'un alliage du type acier inoxydable ou en une feuille d'un composite du type feutre ou tamis comprenant des fibres non métalliques chimiquement inertes occupant plus de 50 % du volume de la membrane, et elle est revêtue d'un dépôt de plomb ou d'alliage de plomb.

Les matières actives peuvent être classiquement des oxydes de plomb et se présentent avantageusement sous forme de poudre ou de pâte. Dans une forme d'exécution préférée, les matières actives sont retenues par et dans une structure, qui en améliore la tenue mécanique et peut aussi faciliter la collecte des charges. Cette structure, de type grille par exemple, prend place contre la membrane.

Conformément à l'invention, l'électrode bipolaire peut comprendre un collecteur ayant comme membrane un feuillard en alliage du type acier inoxydable connu pour sa bonne résistance dans les solutions d'acide sulfurique. Son épaisseur est de préférence comprise entre 20 et 200 micromètres et par exemple de l'ordre de 100 micromètres.

Ce feuillard est revêtu sur ses deux faces d'un dépôt de plomb ou d'un alliage à base de plomb, par exemple plomb-étain ou plomb-antimoine, en particulier suivant un procédé électrochimique décrit ci-après, assurant une excellente adhérence des dépôts. L'épaisseur de ces dépôts est comprise entre 25 et 120 micromètres sur chaque face, par exemple 50 micromètres.

De bonnes conditions d'électro-dépôt sont réalisées quand on prépare préalablement la surface du feuillard par un décapage chimique, par exemple dans une solution à 10 % d'acide fluorhydrique pendant 5 minutes. Après rinçage abondant, on dépose électrolytiquement du plomb, par exemple à partir d'un bain à base de sulfonates de plomb ; respectivement on dépose électrolytiquement un alliage de plomb à partir d'un bain contenant à la fois des ions Pb et des cations de l'autre métal devant être associé au plomb.

Si un tel collecteur est immergé dans un électrolyte contenant H₂SO₄ et soumis sur une de ses faces à une polarisation anodique analogue à celle que subit une électrode positive de plomb durant sa charge, on peut observer une oxydation progressive du dépôt et, à la longue, l'attaque du substrat en acier inoxydable.

En revanche, l'attaque est fortement ralentie lorsque le collecteur est uniformément recouvert des matières actives, celles-ci jouant le rôle d'écran protecteur contre l'oxydation anodique.

Il est ainsi possible de ralentir considérablement la progression de l'oxydation de la feuille revêtue de plomb, et ainsi de pouvoir en constituer un collecteur bipolaire apte à être utilisé sans inconvénient durant plus de 1 000 h de polarisation anodique.

Conformément à l'invention aussi, l'électrode bipolaire peut comprendre comme membrane un collecteur composite qui renferme d'une part, pour plus de 50 % en volume, des fibres non métalliques chimiquement inertes dans les conditions de fonctionnement, et d'autre part un dépôt de plomb ou d'alliage de plomb, qui enrobe les fibres. Les faces de la membrane composite sont ainsi extérieurement revêtues d'une couche de plomb ou d'un alliage de plomb, Pb-Sn ou Pb-Sb par exemple. Bien entendu, la membrane composite doit être résistante au milieu dans laquelle elle baigne, normalement un milieu sulfurique s'agissant d'accumulateurs au plomb.

En variante, la membrane peut être recouverte d'une couche intercalaire d'étain, avant de recevoir le dépôt de plomb ou d'alliage de plomb, qui devient le revêtement extérieur.

La solution consistant à déposer une couche intermédiaire d'étain est également applicable à une membrane consistant en un feuillard d'un alliage du type acier inoxydable.

La réalisation de tels matériaux peut être effectuée par différents procédés. Initialement, on peut partir d'un feutre ou d'un tamis ou maillage dont les brins sont constitués d'un polymère, par exemple du polypropylène, ou de verre. L'épaisseur de cette membrane est comprise entre 50 et 500 micromètres et dans le cas d'un tamis, l'ouverture des mailles est comprise entre 50 micromètres et 1 millimètre et préférentiellement de l'ordre de 100 micromètres. Qu'il s'agisse d'un tamis ou d'un feutre (dont les brins ont des diamètres moyens inférieurs à 100 micromètres) le volume des pores doit être inférieur à 50 % du volume total de la membrane.

Il s'agit ensuite, par différents moyens de remplir totalement les pores ou interstices de plomb ou d'alliage de plomb. Ce remplissage peut être effectué par voie électrochimique dans la mesure où préalablement les fibres ou mailles ont été revêtues par une couche conductrice de très faible épaisseur, par exemple une couche de plomb ou d'étain de 1 micromètre. Ce prédépôt peut être effectué par voie chimique (déplacement) ou voie physique (pulvérisation cathodique, vaporisation sous vide, projection, etc...). Il est ensuite possible de procéder à un électro-dépôt du plomb ou de l'alliage de plomb.

Ce remplissage peut être également être réalisé en une seule phase par une méthode de projection à la flamme, pistolage à l'arc ou projection plasma. Il importe dans ce cas que le dépôt pénètre au coeur de la structure fibreuse du maillage en choisissant par ailleurs des conditions opératoires telles que dans le cas notamment d'un polymère organique constituant le substrat, on ne provoque aucune dégradation thermique ou thermo-chimique du substrat pouvant nuire à la qualité du produit.

Quel que soit le procédé de dépôt, il a été observé qu'on évite tout risque de porosité de la membrane en soumettant celle-ci à un laminage, après remplissage par le métal ou l'alliage métallique. Cette opération peut dans le cas d'un substrat en verre être réalisée à une température légèrement inférieure à celle du point de fusion du matériau métallique assurant le remplissage.

De telles membranes se révèlent être utilisables pendant de longues durées de polarisation anodique, effet d'autant plus marqué que le rapport volume du matériau métallique/volume total de la membrane support est plus petit.

On peut également constater que dans ces conditions, la masse de la membrane est nettement plus faible que celle d'un support de même épaisseur qui serait entièrement constituée de plomb ou d'un de ses alliages. De plus, ses caractéristiques mécaniques sont supérieures, ce qui permet la réalisation de membranes supports d'épaisseur de l'ordre de 0,1 millimètre, d'une manipulation et d'un emploi difficile s'il s'agissait de supports entièrement en plomb ou l'un de ses alliages.

Les électrodes bipolaires réalisées suivant l'un des deux procédés décrits peuvent comprendre des structures complémentaires assurant une bonne rétention des matières actives, par exemple des grilles, qui sont alors remplies des matières actives.

Dans le cas d'électrodes négatives, les grilles ne doivent pas nécessairement présenter une résistance électrique très faible et par conséquent elles pourront avantageusement être faiblement métallisées. Il est apparu judicieux d'utiliser des grilles en polypropylène métallisé, comme celles décrites notamment dans la demande de brevet français n° 90.06750 de la Demanderesse. Avec des grilles dont les ouvertures de mailles sont de l'ordre de 4 millimètres, on obtient de bons résultats lorsque le dépôt de plomb ou d'alliage de plomb les recouvrant correspond à une masse surfacique maximale de 100 mg/cm² par rapport à la surface projetée des grilles et de leurs trous.

Les grilles peuvent être plaquées contre la membrane avant revêtement de celle-ci par le dépôt de plomb ou d'alliage de plomb, en sorte que les grilles sont elles aussi revêtues de ces matériaux en une seule opération.

Les grilles peuvent être aussi appliquées sur les deux faces de la membrane après que celle-ci a été revêtue du dépôt précité. Avantageusement alors, les grilles ont été elles aussi revêtues au préalable et séparément du même métal ou alliage.

Avant empâtage par les matières actives, les grilles sont pressées à chaud sur le collecteur bipolaire de telle façon que soit obtenue une soudure superficielle du plomb revêtant les structures maillées avec le dépôt de plomb ou d'alliage de plomb recouvrant les membranes.

Dans la phase terminale de la fabrication, on procède à l'enduction de chaque face du collecteur bipolaire par les matières actives positives et négatives. Bien entendu, on aura pris soin de ménager sur les deux faces du collecteur bipolaire des marges (d'une largeur de l'ordre de 10 millimètres) qui permettront notamment de réaliser l'étanchéité des éléments à assembler pour réaliser l'accumulateur. On pourra par exemple utiliser une technique de surmoulage d'un polymère, comme décrite en particulier dans la demande de brevet français n° 91.07491 de la Demanderesse.

Par ailleurs, on notera que dans le cas où seront utilisées des membranes dont l'armature est constituée d'un polymère tel que le polypropylène, les marges pourront être initialement faites de polypropylène compact (les mailles ou porosité n'existant pas sur ces marges). Dans ces conditions, l'étanchéité pourra être assurée sans surmoulage par soudure de cadres intermédiaires en polypropylène.

## Revendications

1. Electrode bipolaire pour accumulateurs Pb-PbO₂, caractérisée en ce qu'elle est constituée essentiellement d'une membrane conductrice et de matières actives retenues sur la membrane, la membrane consistant en un feuillard d'un alliage du type acier inoxydable ou en une feuille d'un composite du type feutre ou tamis comprenant des fibres non métalliques chimiquement inertes occupant plus de 50 % du volume de la membrane, et en ce que cette membrane est revêtue d'un dépôt de plomb ou d'alliage de plomb.

2. Electrode bipolaire selon la revendication 1, caractérisée en ce que l'alliage de plomb est un alliage plomb-étain ou un alliage plomb-antimoine.

3. Electrode bipolaire selon la revendication 1, caractérisée en ce qu'elle comprend une structure complémentaire du type grille.

4. Electrode bipolaire selon la revendication 1, caractérisée en ce que la membrane est un feuillard en acier inoxydable ayant une épaisseur comprise entre 20 et 200 micromètres.

5. Electrode bipolaire selon la revendication 1, caractérisée en ce que la membrane est une feuille composite du type feutre ou tamis dont les brins sont constitués d'un polymère ou de verre.

6. Electrode bipolaire selon la revendication 5, caractérisée en ce que l'épaisseur de la feuille est comprise entre 50 et 500 micromètres.

7. Electrode bipolaire selon la revendication 6, caractérisée en ce que l'ouverture des mailles du tamis est comprise entre 50 micromètres et 1 millimètre.

8. Electrode bipolaire selon la revendication 1, caractérisée en ce qu'elle comprend, intercalée entre la membrane et le dépôt de plomb ou d'alliage de plomb, une couche intermédiaire d'étain.

9. Procédé de fabrication d'une électrode bipolaire selon la revendication 4, caractérisé en ce qu'on prépare la surface du feuillard par décapage chimique, qu'après rinçage on dépose électrolytiquement le plomb ou l'alliage de plomb, puis qu'on procède à l'enduction de chaque face par les matières actives.

10. Procédé de fabrication d'une électrode bipolaire selon la revendication 5, caractérisé en ce qu'on dépose à coeur dans la feuille composite, à partir de chaque face, le plomb ou l'alliage de plomb, puis qu'on procède à l'enduction de chaque face par les matières actives.

11. Procédé selon la revendication 10 pour la fabrication d'une électrode bipolaire ayant un dépôt d'étain, caractérisé en ce qu'on dépose sur la membrane, préalablement à l'étain, une couche de plomb ou d'alliage de plomb.

12. Procédé selon la revendication 9 ou 10, caractérisé en ce qu'on fixe une grille en polymère revêtue du dépôt sur chaque face de la membrane par pressage à chaud.

13. Procédé selon l'une des revendications 9 à 12, caractérisé en ce qu'on lamine la membrane revêtue avant l'enduction des matières actives.

## Patentansprüche

1. Bipolare Elektrode für Pb-PbO₂-Akkumulatoren, **dadurch gekennzeichnet**, daß sie im wesentlichen aus einer leitenden Membran und auf der Membran zurückgehaltenen aktiven Materialien gebildet ist, wobei die Membran aus einem Band aus einer Legierung des Typs eines nichtrostenden Stahls oder aus einem Blatt aus einem Verbundmaterial vom Typ eines Filzes oder eines Siebes, das chemisch inerte nichtmetallische Fasern umfaßt, die mehr als 50 % des Volumens der Membran ausmachen, und daß diese Membran mit einer Abscheidung aus Blei oder einer Bleilegierung bedeckt ist.

2. Bipolare Elektrode nach Anspruch 1, **dadurch gekennzeichnet**, daß die Bleilegierung eine Blei-Zinn-Legierung oder eine Blei-Antimon-Legierung ist.

3. Bipolare Elektrode nach Anspruch 1, **dadurch gekennzeichnet**, daß sie eine komplementäre Struktur des Gitter-Typs umfaßt.

4. Bipolare Elektrode nach Anspruch 1, **dadurch gekennzeichnet**, daß die Membran ein Band aus nichtrostendem Stahl mit einer Dicke zwischen 20 und 200 »m ist.

5. Bipolare Elektrode nach Anspruch 1, **dadurch gekennzeichnet,** daß die Membran ein Verbundblatt vom Typ eines Filzes oder eines Gitters ist, dessen Fasern aus einem Polymer oder aus Glas gebildet sind.

6. Bipolare Elektrode nach Anspruch 5, **dadurch gekennzeichnet**, daß die Dicke des Blatts zwischen 50 und 500 »m liegt.

7. Bipolare Elektrode nach Anspruch 6, **dadurch gekennzeichnet**, daß die Maschenweite des Siebes zwischen 50 »m und 1 mm liegt.

8. Bipolare Elektrode nach Anspruch 1, **dadurch gekennzeichnet,** daß sie zwischen der Membran und der Abscheidung aus Blei oder der Bleilegierung eine Zwischenschicht aus Zinn umfaßt.

9. Verfahren zur Herstellung einer bipolaren Elektrode nach Anspruch 4, **dadurch gekennzeichnet**, daß man die Oberfläche des Bandes durch chemisches Beizen vorbereitet, nach dem Spülen elektrolytisch Blei oder eine Bleilegierung abscheidet und dann beide Seiten mit aktiven Materialien beschichtet.

10. Verfahren zur Herstellung einer bipolaren Elektrode nach Anspruch 5, **dadurch gekennzeichnet**, daß man ausgehend von beiden Seiten in der Mitte des Verbundblatts Blei oder die Bleilegierung abscheidet und dann beide Seiten mit den aktiven Materialien beschichtet.

11. Verfahren nach Anspruch 10 für die Herstellung einer bipolaren Elektrode mit einer Zinnabscheidung, **dadurch gekennzeichnet**, daß man vor derAbscheidung von Zinn eine Schicht aus Blei oder einer Bleilegierung auf der Membran abscheidet.

12. Verfahren nach Anspruch 9 oder 10, **dadurch gekennzeichnet,** daß man ein Gitter aus einem Polymeren, das mit einer Abscheidung beschichtet ist, durch Verpressen in der Wärme auf beiden Seiten der Membran fixiert.

13. Verfahren nach einem der Ansprüche 9 bis 12, **dadurch gekennzeichnet**, daß man die beschichtete Membran vor dem Beschichten mit den aktiven Materialien laminiert.

## Claims

1. Bipolar electrode for Pb-PbO₂ accumulators, characterized in that it consists essentially of a conductive membrane and active materials retained on the membrane, the membrane consisting of a strip of a stainless steel type alloy or a sheet of a felt or sieve type composite comprising non-metallic chemically inert fibres occupying more than 50% of the volume of the membrane, and in that this membrane is coated with a deposit of lead or lead alloy.

2. Bipolar electrode according to claim 1, characterized in that the lead alloy is a lead-tin alloy or a lead-antimony alloy.

3. Bipolar electrode according to claim 1, characterized in that it comprises a grille type complementary structure.

4. Bipolar electrode according to claim 1, characterized in that the membrane is a strip of stainless steel with a thickness of between 20 and 200 microns.

5. Bipolar electrode according to claim 1, characterized in that the membrane is a composite sheet or sieve, the strands of which consist of a polymer or glass.

6. Bipolar electrode according to claim 5, characterized in that the thickness of the sheet is between 50 and 500 microns.

7. Bipolar electrode according to claim 6, characterized in that the mesh opening of the sieve is between 50 microns and 1 millimetre.

8. Bipolar electrode according to claim 1, characterized in that between the membrane and the lead or lead alloy deposit is an intermediate layer of tin.

9. Process for production of a bipolar electrode according to claim 4, characterized in that the surface of the strip is prepared by chemical pickling, that after rinsing, the lead or lead alloy is deposited electrolytically, and that each surface is then coated with active materials.

10. Process of production of a bipolar electrode according to claim 5, characterized in that the lead or lead alloy is deposited in the heart of the composite sheet from each surface, and that each surface is then coated with active materials.

11. Process according to claim 10 for the production of a bipolar electrode with a deposit of tin, characterized in that on the membrane, before the tin, is deposited a layer of lead or lead alloy.

12. Process according to claim 9 or 10, characterized in that a polymer grille coated with the deposit is attached to each face of the membrane by hot pressing.

13. Process according to any of claims 9 to 12, characterized in that the coated membrane is laminated before coating with active materials.
